# EUROPEAN PATENT APPLICATION

(11) **EP 4 718 687 A1**
(43) Date of publication of application: **01.04.2026**
(21) Application number: 25194408.8
(22) Date of filing: 06.08.2025
(51) Int. Cl.: H02K 5/22, H02K 7/14, B63H 20/00, B63H 20/12, B63H 21/17

(54) **OUTBOARD MOTOR**

(30) Priority: 26.09.2024 JP 2024167431
(71) Applicant: Suzuki Motor Corporation, Shizuoka 432-8611 (JP)
(72) Inventor: MIYASHITA, Yasushi, Hamamatsu-shi, 432-8611 (JP)
(74) Representative: Haseltine Lake Kempner LLP

(57) **Abstract**

An outboard motor for propelling a ship. The outboard motor includes a propulsion device including a propeller and a motor configured to rotate the propeller, a steering handle configured to change an orientation of the propulsion device in a left-right direction, a shaft portion having a tubular shape and extending in an upper-lower direction, the propulsion device being fixed to a lower end side portion of the shaft portion, the steering handle being fixed to an upper end side portion of the shaft portion, an attachment mechanism configured to attach the shaft portion to the ship so as to be rotated about an axis of the shaft portion.

## Description

### TECHNICAL FIELD

The present disclosure relates to an outboard motor for propelling a ship.

### BACKGROUND ART

In general, an outboard motor includes a propulsion device that generates a propulsion force of a ship and an attachment mechanism that attaches the propulsion device to the ship. The propulsion device includes a propeller and a power source that rotates the propeller. The attachment mechanism includes a clamp bracket that fixes the propulsion device to a transom of the ship, and a swivel bracket that allows the propulsion device to rotate in a left-right direction with respect to the ship.

The swivel bracket is coupled to the clamp bracket. When the clamp bracket is fixed to the ship, the swivel bracket is supported by the ship via the clamp bracket. A shaft extending in an upper-lower direction is rotatably supported by the swivel bracket. The shaft is generally called a pilot shaft or a steering shaft. The propulsion device is coupled to the shaft, and thus the propulsion device can rotate in the left-right direction with respect to the ship. By rotating the propulsion device in the left-right direction, an orientation of the propeller can be changed in the left-right direction, and the ship can be turned.

A cable is connected to the propulsion device. For example, in order to supply electric power to the propulsion device, a battery provided in the ship and the propulsion device may be connected by an electric cable. In order to transmit a control signal to the propulsion device, a control device provided in the ship and the propulsion device may be connected by an electric cable. JP2007-153240A describes an outboard motor in which a battery provided in a ship and an outboard motor body (a propulsion device) are connected by an electric signal line (an electric cable).

In the outboard motor of the related art, the cable connected to the propulsion device is largely displaced in conjunction with the propulsion device when the propulsion device rotates in the left-right direction with respect to the ship.

For example, in an outboard motor described in JP2007-153240A, an extension pipe (16) is rotatably supported by a ship via a stem bracket (66) as illustrated in FIG. 1 of the same patent literature. An outboard motor body (12) is connected to a lower end portion of the extension pipe (16). A bar handle (18) is connected to an upper end portion of the extension pipe (16). By operating the bar handle (18) in a left-right direction, a ship operator can rotate the extension pipe (16) and the outboard motor body (12) integrally in the left-right direction, thereby turning the ship. The outboard motor further includes an electric signal line (52) that connects a battery (50) provided in the ship and the outboard motor body (12). One end of the electric signal line (52) is connected to the battery (50), and the other end of the electric signal line (52) is connected to the outboard motor body (12). The other side portion of the electric signal line (52) is disposed in the extension pipe (16). One side portion of the electric signal line (52) passes through a hole formed in a peripheral wall of an upper end side portion of the extension pipe (16), and is drawn out of the extension pipe (16) from the extension pipe (16). Since the one side portion of the electric signal line (52) is drawn out of the extension pipe (16) through the hole formed in the peripheral wall of the upper end side portion of the extension pipe (16), the one side portion of the electric signal line (52) is largely displaced in the left-right direction in conjunction with the extension pipe (16) and the outboard motor body (12) when the extension pipe (16) and the outboard motor body (12) are rotated by the ship operator operating the bar handle (18) in the left-right direction. The reference numerals in parentheses in the above description are the reference numerals in JP2007-153240A.

When the cable connected to the propulsion device is largely displaced, the cable may hit a hull or an object provided on the ship, and the hull, the object, or the cable may be damaged.

### SUMMARY OF INVENTION

Aspect of non-limiting embodiments of the present disclosure relates to provide an outboard motor capable of preventing a cable connected to a propulsion device from being displaced in conjunction with the propulsion device.

Aspects of certain non-limiting embodiments of the present disclosure address the features discussed above and/or other features not described above. However, aspects of the non-limiting embodiments are not required to address the above features, and aspects of the non-limiting embodiments of the present disclosure may not address features described above.

According to an aspect of the present disclosure, there is provided an outboard motor for propelling a ship, the outboard motor including:
a propulsion device including a propeller and a motor configured to rotate the propeller;
a steering handle configured to change an orientation of the propulsion device in a left-right direction;
a shaft portion having a tubular shape and extending in an upper-lower direction, the propulsion device being fixed to a lower end side portion of the shaft portion, the steering handle being fixed to an upper end side portion of the shaft portion;
an attachment mechanism configured to attach the shaft portion to the ship so as to be rotated about an axis of the shaft portion;
a cable passing through inside the shaft portion and configured to transmit electric power or an electric signal for driving the motor to the propulsion device, a lower end portion of the cable being fixed to the propulsion device, an upper portion of the cable being drawn out of the shaft portion from an opening portion at an upper side of the shaft portion; and
a cable support portion configured to support a part of a portion of the cable drawn out of the shaft portion from the opening portion at the upper side of the shaft portion, a portion of the cable positioned above the opening portion at the upper side of the shaft portion, or a portion of the cable positioned inside the opening portion at the upper side of the shaft portion so as not to be rotated in the left-right direction with respect to the attachment mechanism.

### BRIEF DESCRIPTION OF DRAWINGS

Exemplary embodiment(s) of the present invention will be described in detail based on the following figures, wherein:
FIG. 1 is an external view illustrating an outboard motor according to a first embodiment of the present disclosure;
FIG. 2 is a sectional view of the outboard motor according to the first embodiment of the present disclosure cut to the left and right with an axis of a shaft portion as a boundary;
FIG. 3 is a sectional view illustrating a portion of the outboard motor illustrated in FIG. 2 that rotates in a left-right direction with respect to the ship;
FIG. 4 is an enlarged sectional view illustrating an upper portion of the outboard motor illustrated in FIG. 2;
FIG. 5 is a sectional view illustrating the outboard motor taken along a cutting line V-V in FIG. 4 as viewed from above;
FIG. 6 is an explanatory view illustrating the outboard motor according to the first embodiment of the present disclosure with a top cover removed as viewed from above;
FIG. 7A is a sectional view illustrating an upper portion of the outboard motor taken along a cutting line VIIa-VIIa in FIG. 6 as viewed from the front;
FIG. 7B is a sectional view illustrating a bus bar and the like taken along a cutting line VIIb-VIIb in FIG. 6 as viewed from the left;
FIG. 8 is a perspective view illustrating the bus bar of the outboard motor according to the first embodiment of the present disclosure;
FIG. 9A is an explanatory view illustrating a lower bush of the outboard motor according to the first embodiment of the present disclosure;
FIG. 9B is an explanatory view illustrating an upper bush of the outboard motor;
FIG. 9C is an explanatory view illustrating a modification of the upper bush of the outboard motor;
FIG. 10A is a sectional view illustrating an outboard motor according to a second embodiment of the present disclosure; and
FIG. 10B is an explanatory view illustrating the outboard motor with a top cover removed as viewed from above.

### DESCRIPTION OF EMBODIMENTS

An outboard motor according to an embodiment of the present disclosure includes a propulsion device, a steering handle, a shaft portion, an attachment mechanism, a cable, and a cable support portion. In the outboard motor according to the present embodiment, the propulsion device is a device that generates a propulsion force of a ship. The propulsion device includes a propeller and a motor that rotates the propeller.

The steering handle is a handle that changes an orientation of the propulsion device in a left-right direction, and is, for example, a bar handle. By changing the orientation of the propulsion device in the left-right direction, an orientation of the propeller in the left-right direction changes. A ship operator can turn the ship by operating the steering handle.

The shaft portion is formed in a tubular shape and extends in an upper-lower direction. The propulsion device is fixed to a lower end side portion of the shaft portion, and the steering handle is fixed to an upper end side portion of the shaft portion.

The attachment mechanism is a mechanism that attaches the shaft portion to the ship so as to be rotatable about an axis of the shaft portion. Since the shaft portion is rotatably attached to the ship by the attachment mechanism, the propulsion device and the steering handle fixed to the shaft portion are rotatably supported on the ship. When the ship operator rotates the steering handle in the left-right direction, the shaft portion rotates about the axis, and the propulsion device rotates in the left-right direction integrally with the shaft portion.

The cable is an electric cable that transmits electric power or an electric signal for driving the motor to the propulsion device. A lower portion of the cable passes through the shaft portion. A lower end portion of the cable is fixed to the propulsion device. An upper portion of the cable is drawn out of the shaft portion from an opening portion at an upper side of the shaft portion. An end portion of the cable on a side where the cable is drawn out of the shaft portion from the opening portion at the upper side of the shaft portion is connected to, for example, a battery provided in the ship or a control device provided in the ship.

The cable support portion is a member or a mechanism that supports a part of a portion of the cable drawn out of the shaft portion from the opening portion at the upper side of the shaft portion, a portion of the cable positioned above the opening portion at the upper side of the shaft portion, or a portion of the cable positioned inside the opening portion at the upper side of the shaft portion such that these portions are not rotatable in the left-right direction with respect to the attachment mechanism.

The outboard motor according to the present embodiment includes the following three aspects.

Aspect (1) A part of the portion of the cable drawn out of the shaft portion from the opening portion at the upper side of the shaft portion is supported by the cable support portion so as not to be rotatable in the left-right direction with respect to the attachment mechanism.

Aspect (2) The portion of the cable positioned above the opening portion at the upper side of the shaft portion is supported by the cable support portion so as not to be rotatable in the left-right direction with respect to the attachment mechanism.

Aspect (3) The portion of the cable positioned inside the opening portion at the upper side of the shaft portion is supported by the cable support portion so as not to be rotatable in the left-right direction with respect to the attachment mechanism.

Aspect (2) is a subordinate aspect of Aspect (1) and is included in Aspect (1).

In the outboard motor according to the present embodiment, in the case where the part of the portion of the cable drawn out of the shaft portion from the opening portion at the upper side of the shaft portion, except for the portion positioned above the opening portion at the upper side of the shaft portion, is supported by the cable support portion so as not to be rotatable in the left-right direction with respect to the attachment mechanism (this is an aspect obtained by excluding Aspect (2) from Aspect (1)), the outboard motor according to the present embodiment provides the following effects.

The lower portion of the cable passes through the shaft portion and extends in the upper-lower direction. The lower end portion of the cable is fixed to the propulsion device. The upper portion of the cable is drawn out of the shaft portion from the opening portion at the upper side of the shaft portion. In addition, the part of the portion of the cable drawn out of the shaft portion from the opening portion at the upper side of the shaft portion, except for the portion positioned above the opening portion at the upper side of the shaft portion is supported by the cable support portion so as not to be rotatable in the left-right direction with respect to the attachment mechanism. In such a configuration, when the ship operator rotates the steering handle in the left-right direction and whereby the propulsion device rotates in the left-right direction integrally with the shaft portion, the portion of the cable passing through the shaft portion is displaced so as to be twisted substantially about the axis of the shaft portion. At the same time, a portion of the cable from a portion supported by the cable support portion to a portion positioned in the opening portion at the upper side of the shaft portion is displaced in the left-right direction. However, even when the shaft portion and the propulsion device are rotated in the left-right direction by the ship operator rotating the steering handle in the left-right direction, a portion of the cable from an end portion connected to a battery, a control device, or the like provided in the ship to a portion supported by the cable support portion is not displaced.

As described above, in the outboard motor according to the present embodiment, in the case where the part of the portion of the cable drawn out of the shaft portion from the opening portion at the upper side of the shaft portion, except for the portion positioned above the opening portion at the upper side of the shaft portion, is supported by the cable support portion so as not to be rotatable in the left-right direction with respect to the attachment mechanism, the cable connected to the propulsion device can be prevented from being displaced in conjunction with the propulsion device when the propulsion device rotates in the left-right direction with respect to the ship. Specifically, when the propulsion device rotates in the left-right direction with respect to the ship, a portion of the cable connected to the propulsion device from the end portion connected to the battery, the control device, or the like provided in the ship to a portion supported by the cable support portion is prevented from being displaced in conjunction with the propulsion device. Therefore, when the propulsion device rotates in the left-right direction with respect to the ship, the cable connected to the propulsion device is prevented from hitting a hull or an object provided on the ship.

In this aspect, since the lower portion of the cable passes through the shaft portion and the upper portion of the cable is drawn out of the shaft portion from the opening portion at the upper side of the shaft portion, when the propulsion device rotate in the left-right direction with respect to the ship integrally with the shaft portion, the lower portion of the cable is displaced so as to be twisted substantially about the axis of the shaft portion. As a result, it is possible to reduce an amount of displacement of the portion of the cable from the portion supported by the cable support portion to the portion positioned in the opening portion at the upper side of the shaft portion. Therefore, when the propulsion device rotates in the left-right direction with respect to the ship and the portion of the cable from the portion supported by the cable support portion to the portion positioned in the opening portion at the upper side of the shaft portion is displaced, a force applied from the cable to the cable support portion can be reduced. Therefore, even if a strength with which the cable is supported by the cable support portion is reduced, the cable can be sufficiently supported by the cable support portion, and thus the structure of the cable support portion can be simplified.

In the outboard motor according to the present embodiment, in the case where the portion of the cable positioned above the opening portion at the upper side of the shaft portion is supported by the cable support portion so as not to be rotatable in the left-right direction with respect to the attachment mechanism, the outboard motor according to the present embodiment provides the following effects.

The lower portion of the cable passes through the shaft portion and extends in the upper-lower direction. The lower end portion of the cable is fixed to the propulsion device. The upper portion of the cable is drawn out of the shaft portion from the opening portion at the upper side of the shaft portion. Further, the portion of the cable positioned above the opening portion at the upper side of the shaft portion is supported by the cable support portion so as not to be rotatable in the left-right direction with respect to the attachment mechanism. In such a configuration, when the ship operator rotates the steering handle in the left-right direction and whereby the propulsion device rotates in the left-right direction integrally with the shaft portion, the portion of the cable from the portion positioned above the opening portion at the upper side of the shaft portion to the lower end portion is displaced so as to be twisted substantially about the axis of the shaft portion. However, even when the shaft portion and the propulsion device are rotated in the left-right direction by the ship operator rotating the steering handle in the left-right direction, a portion of the cable from the end portion connected to the battery, the control device, or the like provided in the ship to the portion positioned above the opening portion at the upper side of the shaft portion is not displaced.

As described above, in the outboard motor according to the present embodiment, in the case where the portion of the cable positioned above the opening portion at the upper side of the shaft portion is supported by the cable support portion so as not to be rotatable in the left-right direction with respect to the attachment mechanism, the cable connected to the propulsion device can be prevented from being displaced in conjunction with the propulsion device when the propulsion device rotates in the left-right direction with respect to the ship. Specifically, when the propulsion device rotates in the left-right direction with respect to the ship, the portion of the cable connected to the propulsion device from the end portion connected to the battery, the control device, or the like provided in the ship to the portion positioned above the opening portion at the upper side of the shaft portion can be prevented from being displaced in conjunction with the propulsion device. Therefore, when the propulsion device rotates in the left-right direction with respect to the ship, the cable connected to the propulsion device can be prevented from hitting a hull or an object provided on the ship.

In this aspect, when the propulsion device rotates in the left-right direction, the portion of the cable that is displaced is a portion from the portion positioned above the opening portion at the upper side of the shaft portion to the lower end portion. When the propulsion device rotates in the left-right direction, this portion is displaced so as to be twisted substantially about the axis of the shaft portion. Therefore, it is sufficient to secure a space above the opening portion at the upper side of the shaft portion and a space in the shaft portion as a space for allowing the displacement of the cable accompanying the rotation of the propulsion device. Therefore, the space for allowing the displacement of the cable accompanying the rotation of the propulsion device can be reduced. Accordingly, a compact outboard motor is achieved.

In the outboard motor according to the present embodiment, in the case where the portion of the cable positioned inside the opening portion at the upper side of the shaft portion is supported by the cable support portion so as not to be rotatable in the left-right direction with respect to the attachment mechanism, the outboard motor according to the present embodiment provides the following effects.

The lower portion of the cable passes through the shaft portion and extends in the upper-lower direction. The lower end portion of the cable is fixed to the propulsion device. The upper portion of the cable is drawn out of the shaft portion from the opening portion at the upper side of the shaft portion. Further, the portion of the cable positioned inside the opening portion at the upper side of the shaft portion is supported by the cable support portion so as not to be rotatable in the left-right direction with respect to the attachment mechanism. In such a configuration, when the ship operator rotates the steering handle in the left-right direction and whereby the propulsion device rotates in the left-right direction integrally with the shaft portion, the portion of the cable from the portion positioned inside the opening portion at the upper side of the shaft portion to the lower end portion is displaced so as to be twisted substantially about the axis of the shaft portion. However, even when the shaft portion and the propulsion device are rotated in the left-right direction by the ship operator rotating the steering handle in the left-right direction, a portion of the cable from the end portion connected to the battery, the control device, or the like provided in the ship to the portion positioned inside the opening portion at the upper side of the shaft portion is not displaced.

As described above, in the outboard motor according to the present embodiment, in the case where the portion of the cable positioned inside the opening portion at the upper side of the shaft portion is supported by the cable support portion so as not to be rotatable in the left-right direction with respect to the attachment mechanism, the cable connected to the propulsion device can be prevented from being displaced in conjunction with the propulsion device when the propulsion device rotates in the left-right direction with respect to the ship. Specifically, when the propulsion device rotates in the left-right direction with respect to the ship, the portion of the cable connected to the propulsion device from the end portion connected to the battery, the control device, or the like provided in the ship to the portion positioned inside the opening portion at the upper side of the shaft portion can be prevented from being displaced in conjunction with the propulsion device. Therefore, when the propulsion device rotates in the left-right direction with respect to the ship, the cable connected to the propulsion device can be prevented from hitting a hull or an object provided on the ship.

In this aspect, when the propulsion device rotates in the left-right direction, the portion of the cable that is displaced is a portion from the portion positioned inside the opening portion at the upper side of the shaft portion to the lower end portion. When the propulsion device rotates in the left-right direction, this portion is displaced so as to be twisted substantially about the axis of the shaft portion. Therefore, it is sufficient to secure the space in the shaft portion as the space for allowing the displacement of the cable accompanying the rotation of the propulsion device. Therefore, the space for allowing the displacement of the cable accompanying the rotation of the propulsion device can be reduced. Accordingly, the compact outboard motor is achieved.

### First Embodiment

Hereinafter, some embodiments of the present disclosure will be described with reference to the drawings. In the description of the embodiment, when describing directions of upper (Ud), lower (Dd), front (Fd), rear (Bd), left (Ld), and right (Rd), arrows drawn at the lower left of each figure are followed for the sake of convenience of description.

### Basic Configuration of Outboard Motor

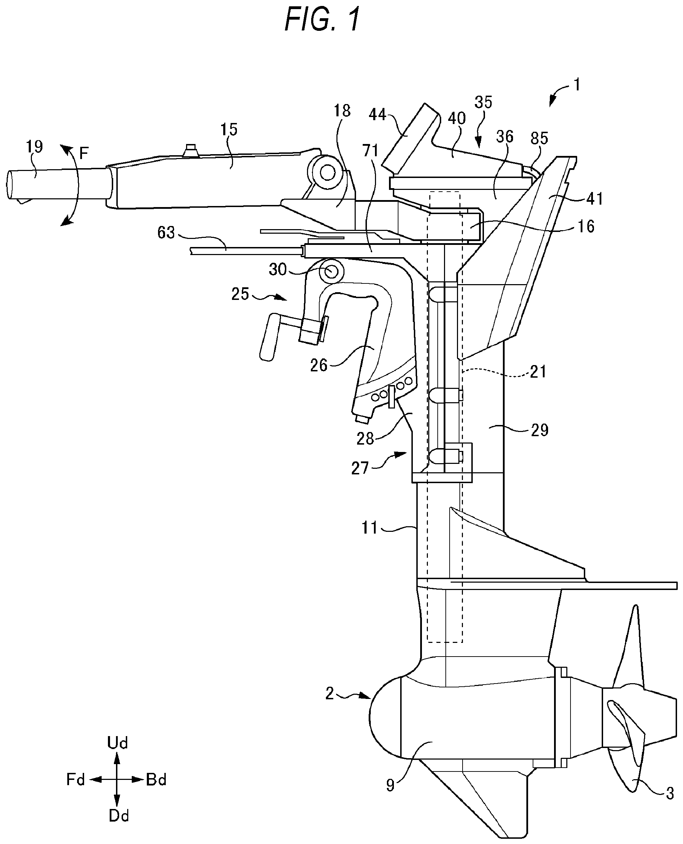

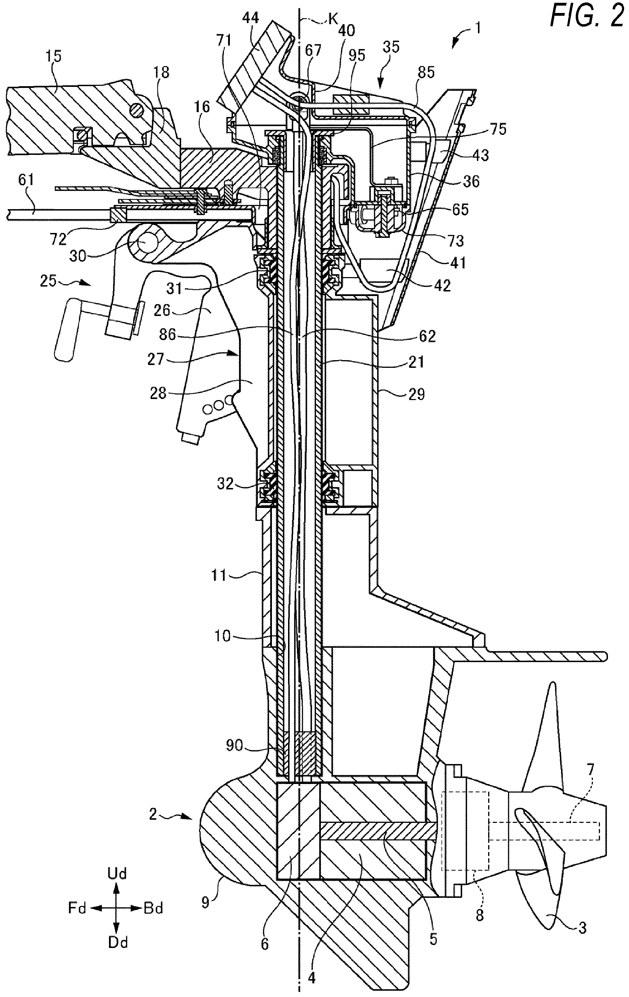

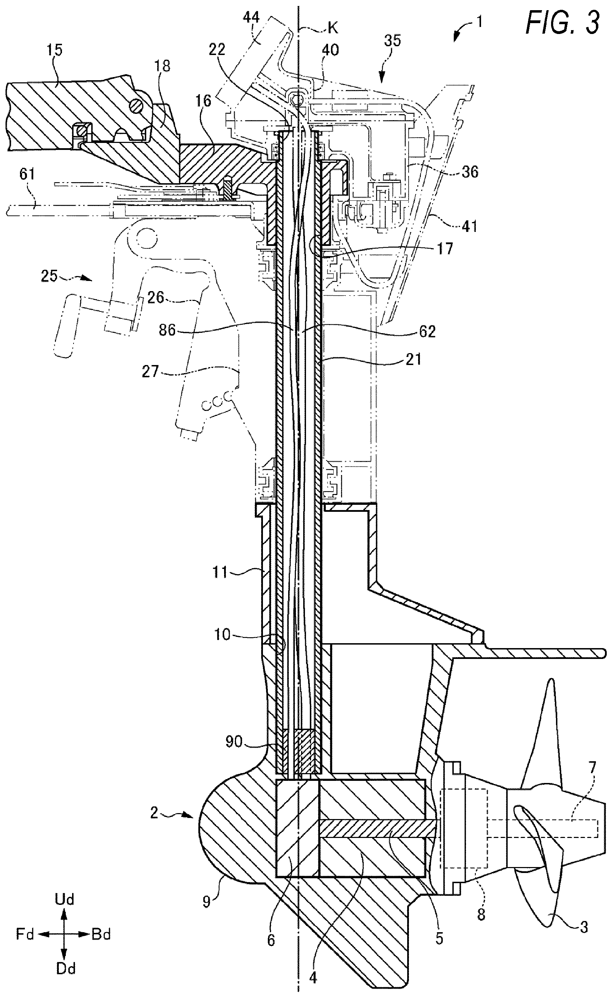

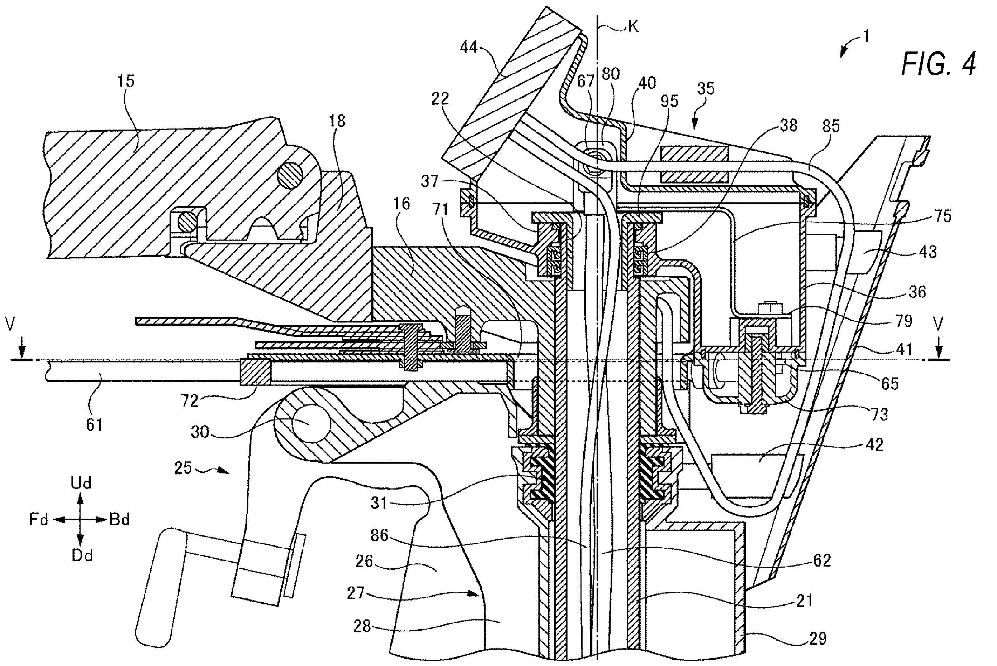

FIG. 1 illustrates an outboard motor 1 according to a first embodiment of the present disclosure as viewed from the left. FIG. 2 illustrates a cross section of the outboard motor 1 cut to the left and right with an axis K of a shaft portion 21 as a boundary. FIG. 3 illustrates a portion of the outboard motor 1 that rotates in a left-right direction with respect to a ship. FIG. 4 illustrates an enlarged view of an upper portion of the outboard motor 1 in FIG. 2.

The outboard motor 1 is a device for propelling a ship and is attached to the ship. As illustrated in FIG. 1, the outboard motor 1 includes a propulsion device 2 configured to generate a propulsion force of the ship, a steering handle 15 for steering the ship, the shaft portion 21 configured to connect the propulsion device 2 and the steering handle 15 to each other, and an attachment mechanism 25 configured to attach the propulsion device 2, the steering handle 15, and the shaft portion 21 to the ship.

The propulsion device 2 is disposed in a lower portion of the outboard motor 1. In a state in which the outboard motor 1 is attached to the ship, the propulsion device 2 is positioned below a water surface. As illustrated in FIG. 2, the propulsion device 2 includes a propeller 3, a motor (electric motor) 4 configured to rotate the propeller 3, an inverter 6 configured to control driving of the motor 4, a propeller shaft 7 configured to support the propeller 3, a speed reducer 8 configured to reduce rotation of an output shaft 5 of the motor 4 and transmit the rotation to the propeller shaft 7, and a lower case 9 configured to accommodate the motor 4, the inverter 6, the speed reducer 8, and the like. The inverter 6 is disposed at a front portion in the lower case 9. The inverter 6 is positioned below the shaft portion 21. The motor 4 is disposed behind the inverter 6, and the speed reducer 8 is disposed behind the motor 4. The output shaft 5 of the motor 4 extends in a front-rear direction, and a rear end side portion of the output shaft 5 is connected to the speed reducer 8. The propeller shaft 7 extends in the front-rear direction, a front end side portion of the propeller shaft 7 is connected to the speed reducer 8, and the propeller 3 is attached to a rear portion of the propeller shaft 7. A middle case 11 is provided above the lower case 9. The middle case 11 is fixed to the lower case 9.

The steering handle 15 is a bar handle and extends in the front-rear direction. A rear end portion of the steering handle 15 is connected to an upper end side portion of the shaft portion 21 via a handle coupling member 16 and a handle bracket 18. Specifically, as illustrated in FIG. 3, the upper end side portion of the shaft portion 21 is inserted into an attachment hole 17 provided in a rear portion of the handle coupling member 16. The handle coupling member 16 is non-rotatably coupled to the shaft portion 21 via, for example, a key or a spline. The handle bracket 18 is attached to a front end portion of the handle coupling member 16. A rear end portion of the steering handle 15 is attached to the handle bracket 18. As illustrated in FIG. 1, a grip 19 is provided at a front end portion of the steering handle 15. The grip 19 is attached to the steering handle 15 so as to be rotatable in a direction indicated by an arrow F in FIG. 1. The ship operator can change the orientation of the propulsion device 2 in the left-right direction by gripping the grip 19 and moving the steering handle 15 in the left direction or the right direction, thereby changing the orientation of the propeller 3 in the left-right direction and turning the ship. Further, the ship operator can change a rotation speed of the motor 4 by rotating the grip 19 in a direction of an arrow F, thereby changing a rotation speed of the propeller 3 and changing a speed of the ship.

As illustrated in FIG. 3, the shaft portion 21 is formed in a cylindrical shape and extends in the upper-lower direction. As described above, the steering handle 15 is connected to the upper end side portion of the shaft portion 21. The steering handle 15 is fixed to the shaft portion 21 and is configured not to be rotated with respect to the shaft portion 21. The propulsion device 2 is connected to a lower end side portion of the shaft portion 21. The propulsion device 2 is fixed to the shaft portion 21 and is configured not to be rotated with respect to the shaft portion 21. Specifically, a lower portion of the shaft portion 21 passes through the middle case 11. A lower end side portion of the shaft portion 21 is inserted into an attachment hole 10 provided in the lower case 9 and fixed to the lower case 9.

The attachment mechanism 25 is a mechanism configured to attach the shaft portion 21 to the ship such that the shaft portion 21 is rotatable about the axis K of the shaft portion 21. Since the shaft portion 21 is rotatably attached to the ship by the attachment mechanism 25, the propulsion device 2 and the steering handle 15 fixed to the shaft portion 21 are rotatably supported on the ship. As illustrated in FIG. 1, the attachment mechanism 25 includes a clamp bracket 26 configured to attach and fixes the shaft portion 21 to a transom of the ship, a swivel bracket 27 configured to support the shaft portion 21 to be rotatable about the axis K of the shaft portion 21 with respect to the ship, and a tilt shaft 30 configured to couple the clamp bracket 26 and the swivel bracket 27 to each other. The swivel bracket 27 includes a front bracket portion 28 and a rear bracket portion 29. The swivel bracket 27 is formed by coupling the front bracket portion 28 and the rear bracket portion 29 to each other by a coupling member such as a bolt. As illustrated in FIG. 2, the shaft portion 21 is sandwiched between the front bracket portion 28 and the rear bracket portion 29.

The shaft portion 21 is supported by the swivel bracket 27 via two mounts 31 and 32. One mount 31 is disposed at an upper portion of the shaft portion 21, and the other mount 32 is disposed at an intermediate portion or a lower portion in the upper-lower direction of the shaft portion 21. Each of the mounts 31 and 32 has an elastic support portion that elastically supports the shaft portion 21. The elastic support portion is configured to prevent vibration transmitted from the shaft portion 21 to the ship. The elastic support portion is not rotatable with respect to the swivel bracket 27, and the shaft portion 21 is rotatable with respect to the elastic support portion.

The outboard motor 1 includes an upper case 35. The upper case 35 is fixed to the attachment mechanism 25 and covers the upper end side portion of the shaft portion 21. As illustrated in FIG. 4, the upper case 35 includes a case body 36, a top cover 40 covering the case body 36 from above, and a rear cover 41 covering the case body 36 from the rear.

The case body 36 is formed in a box shape whose upper side is open. A lower wall of a rear portion of the case body 36 is lower than a lower wall of a front portion of the case body 36. A shaft insertion portion 37 is provided in the lower wall of the front portion of the case body 36. The shaft insertion portion 37 is formed in a cylindrical shape, and the uppermost end portion of the shaft portion 21 is inserted into the shaft insertion portion 37 so as to be rotatable with respect to the case body 36. A seal member 38 is provided between an outer peripheral surface of the uppermost end portion of the shaft portion 21 and the shaft insertion portion 37 to liquid-tightly seal therebetween.

The top cover 40 is attached to the case body 36 so as to liquid-tightly close an opening portion at an upper side of the case body 36. A monitor 44 is provided at a front portion of the top cover 40. The monitor 44 displays, for example, information on a state or an operation of the outboard motor 1, such as the rotation speed of the motor 4.

The rear cover 41 has a function of fixing the case body 36 to the attachment mechanism 25 (specifically, the swivel bracket 27) in addition to a function of protecting the case body 36 from the rear. A lower portion of the rear cover 41 is provided with a coupling portion 42 that couples the rear cover 41 to an upper portion of the rear bracket portion 29 of the swivel bracket 27. The coupling portion 42 is coupled to the upper portion of the rear bracket portion 29 using a coupling member such as a bolt. A coupling portion 43 that couples the case body 36 to the rear cover 41 is provided at the upper portion of the rear cover 41. The rear portion of the case body 36 is coupled to the coupling portion 43 using a coupling member such as a bolt. Therefore, the case body 36 is fixed to the swivel bracket 27 via the rear cover 41. The rear cover 41 has a strength sufficient to firmly support the case body 36, the top cover 40, the monitor 44, and the like on the swivel bracket 27.

### Configuration Regarding Cable Wiring

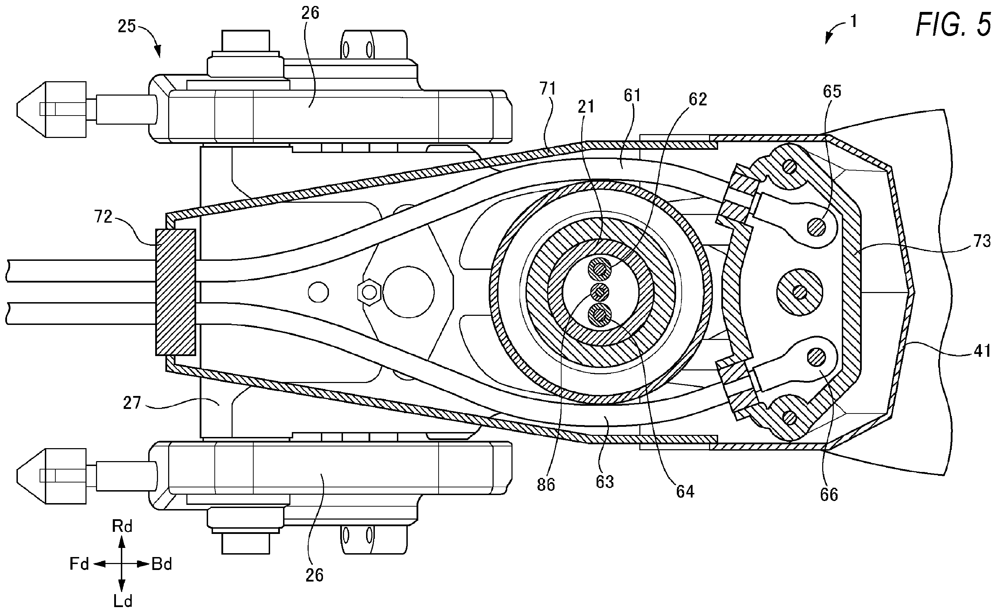

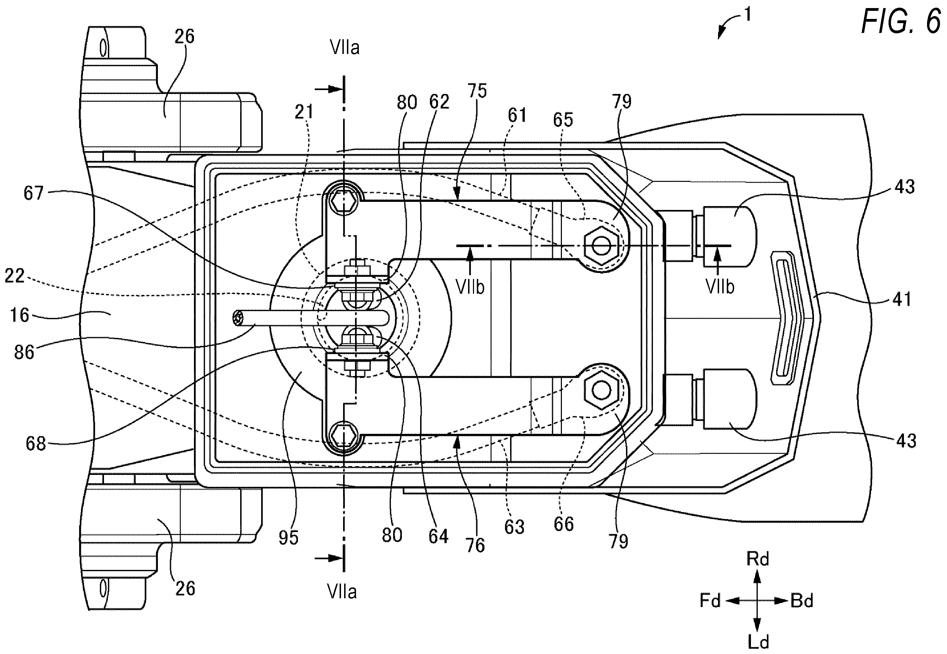

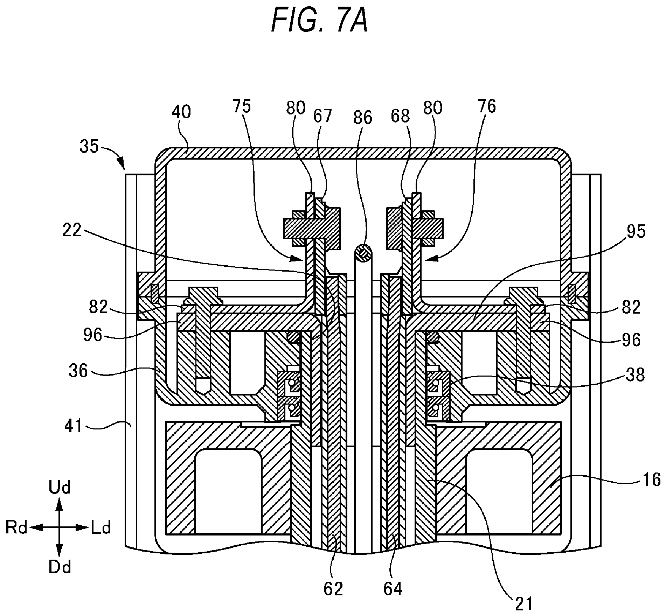

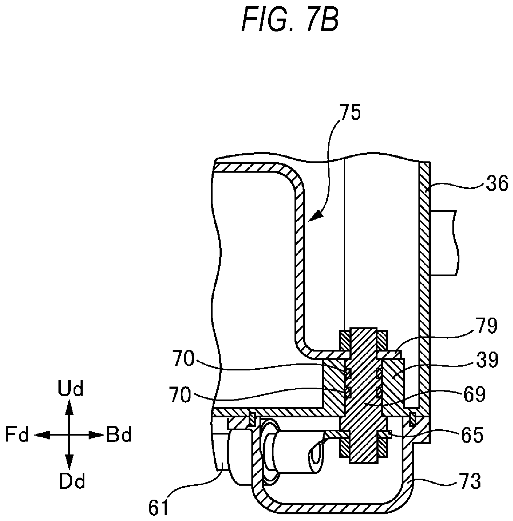

FIG. 5 illustrates a cross section of the outboard motor 1 taken along a cutting line V-V in FIG. 4 as viewed from above. FIG. 6 illustrates the outboard motor 1 with the top cover 40 of the upper case 35 removed as viewed from above. FIG. 7A illustrates the outboard motor 1 cut along a cutting line VIIa-VIIa in FIG. 6 as viewed from the front (the left in FIG. 6). FIG. 7B illustrates a cross section of a bus bar 75 and the like taken along a cutting line VIIb-VIIb in FIG. 6 as viewed from the left (below in FIG. 6).

As illustrated in FIGS. 4 to 6, 7A, and 7B, the outboard motor 1 includes two external power cables 61 and 63, two internal power cables 62 and 64, two terminal connection members 69 (only one is illustrated in FIG. 7B), and two bus bars 75 and 76 as components related to electric power supply to the propulsion device 2. The outboard motor 1 includes an external signal cable 85 and an internal signal cable 86 as components related to transmission of an electric signal to the propulsion device 2. Each of the external power cables 61 and 63 is a specific example of a "first cable portion", each of the internal power cables 62 and 64 is a specific example of a "second cable portion", and each of the bus bars 75 and 76 is a specific example of a "cable support portion".

The two external power cables 61 and 63 and the two internal power cables 62 and 64 are electric cables for supplying electric power for driving the motor 4 of the propulsion device 2 from a battery provided in the ship to which the outboard motor 1 is attached, to the propulsion device 2, for example. Specifically, of the two external power cables 61 and 63 and the two internal power cables 62 and 64, the external power cables 61 and the internal power cables 62 are electric cables that connect a positive terminal of the battery and a positive terminal of the inverter 6 of the propulsion device 2, for example. The external power cable 63 and the internal power cable 64 are electric cables that connect a negative terminal of the battery and a negative terminal (or a ground terminal) of the inverter 6, for example. Each of the external power cables 61 and 63 and the internal power cables 62 and 64 is a single-core cable, and includes a core wire formed of a conductive material and a coating formed of an insulating material covering an outer peripheral side of the core wire.

When electric power is supplied from the battery to the inverter 6, from an electrical standpoint, one cable is sufficient to connect the positive terminal of the battery and the positive terminal of the inverter 6, and one cable is sufficient to connect the negative terminal of the battery and the negative terminal of the inverter 6. However, in the present embodiment, the cable connecting the positive terminal of the battery and the positive terminal of the inverter 6 is divided into the external power cable 61 and the internal power cable 62, and the cable connecting the negative terminal of the battery and the negative terminal of the inverter 6 is divided into the external power cable 63 and the internal power cable 64. From an electrical standpoint, the external power cable 61 and the internal power cable 62 are connected in series between the positive terminal of the battery and the positive terminal of the inverter 6, and the external power cable 63 and the internal power cable 64 are connected in series between the negative terminal of the battery and the negative terminal of the inverter 6.

A front end portion of the external power cable 61 is connected to the positive terminal of the battery provided in the ship to which the outboard motor 1 is attached. The external power cable 61 extends rearward from the ship toward the outboard motor 1, and for example, passes above the transom to reach the outboard motor 1. Further, in the outboard motor 1, the external power cable 61 extends rearward through a portion above the swivel bracket 27 and below the steering handle 15 as illustrated in FIG. 4, then extends rearward through a position on the right side of the shaft portion 21 and away from the shaft portion 21 as illustrated in FIG. 5, and then reaches below a right portion of the rear portion of the case body 36 of the upper case 35 as illustrated in FIG. 4. As illustrated in FIG. 5, a terminal 65 made of a conductive material such as metal is attached to a rear end portion of the external power cable 61. The terminal 65 is electrically connected to the core wire of the external power cable 61. As illustrated in FIG. 7B, a connection member insertion portion 39 is provided on the lower wall of the right portion of the rear portion of the case body 36. The connection member insertion portion 39 is formed in a tubular shape, and the terminal connection member 69 is inserted into the connection member insertion portion 39. The terminal connection member 69 is a columnar member formed of a conductive material such as metal. A seal member 70 is provided between the terminal connection member 69 and the connection member insertion portion 39 to liquid-tightly seal therebetween. The terminal 65 is connected to a lower end portion of the terminal connection member 69. Thus, the core wire of the external power cable 61 is electrically connected to the terminal connection member 69.

A front end portion of the external power cable 63 is connected to the negative terminal of the battery provided in the ship to which the outboard motor 1 is attached. Like the external power cable 61, the external power cable 63 extends rearward from the ship and reaches the outboard motor 1. Further, in the outboard motor 1, the external power cable 63 extends rearward through a portion above the swivel bracket 27 and below the steering handle 15, then extends rearward through a position on the left side of the shaft portion 21 and away from the shaft portion 21 as illustrated in FIG. 5, and then reaches below a left portion of the rear portion of the case body 36 of the upper case 35. A terminal 66 made of a conductive material such as metal is attached to the rear end portion of the external power cable 63. The terminal 66 is electrically connected to the core wire of the external power cable 63. Although not illustrated, a connection member insertion portion similar to the connection member insertion portion 39 provided on the right portion of the rear portion of the case body 36 is provided on a lower wall of the left portion of the rear portion of the case body 36, and a terminal connection member similar to the terminal connection member 69 is inserted into the connection member insertion portion. The terminal 66 is connected to a lower end portion of the terminal connection member. Thus, the core wire of the external power cable 63 is electrically connected to the terminal connection member

As illustrated in FIGS. 4 and 5, the outboard motor 1 is provided with a cable cover 71 that covers portions of the external power cables 61 and 63 that are positioned above the swivel bracket 27 and below the steering handle 15, and the portions thereof that are positioned on lateral sides of the shaft portion 21. A cable holding member 72 configured to hold the external power cables 61 and 63 at a front end portion of the cable cover 71 is provided at the front end portion of the cable cover 71. The outboard motor 1 is provided with a terminal cover 73 that covers the terminal 65 of the external power cable 61 and the terminal 66 of the external power cable 63 connected to the lower end portions of the two terminal connection members 69. The terminal cover 73 is attached to a lower surface of the lower wall of the rear portion of the case body 36 using a fixing member such as a bolt. In addition, in order to prevent the terminals 65 and 66 and the terminal connection members 69 from coming into contact with water, the terminal cover 73 is attached to the lower surface of the lower wall of the rear portion of the case body 36 via a seal member to liquid-tightly cover the terminals 65 and 66 and the terminal connection members 69.

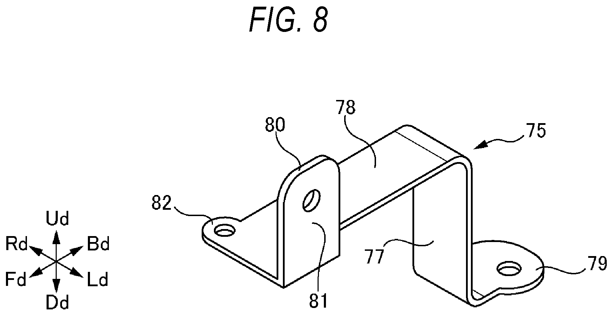

As illustrated in FIG. 6, the two bus bars 75 and 76 are provided in the case body 36. One bus bar 75 is disposed in a right portion in the case body 36, and the other bus bar 76 is disposed in a left portion in the case body 36. Each of the bus bars 75 and 76 is formed of a conductive material such as metal. For example, each of the bus bars 75 and 76 is formed by cutting a copper plate having a thickness of about 1 mm to 5 mm into a predetermined shape and then bending the copper plate. As illustrated in FIG. 8, the bus bar 75 has an L shape in a side view having a plate portion 77 extending in the upper-lower direction and a plate portion 78 extending in the front-rear direction. A first connection portion 79 is provided at a rear end portion of the bus bar 75. The first connection portion 79 extends rearward from a lower end portion of the plate portion 77. A second connection portion 80 is provided at a front end portion of the bus bar 75. The second connection portion 80 extends upward from a left end portion of a front portion of the plate portion 78. The second connection portion 80 has a connection surface 81 parallel to the axis K of the shaft portion 21. Further, a fixing portion 82 for fixing the bus bar 75 to the case body 36 is provided at the front end portion of the bus bar 75. The fixing portion 82 is disposed at a right-front corner portion of the plate portion 78. The bus bar 76 has a shape symmetrical to the bus bar 75, and is formed similarly to the bus bar 75.

As illustrated in FIGS. 4 and 6, the bus bar 75 is disposed in a right portion in the case body 36 such that the second connection portion 80 is positioned above an opening portion 22 at the upper side of the shaft portion 21. As illustrated in FIGS. 6 and 7A, the fixing portion 82 of the bus bar 75 is fixed to a right front portion of the case body 36 using a fixing member such as a bolt. In addition, the bus bar 76 is disposed in a left portion in the case body 36 such that the second connection portion 80 is positioned above the opening portion 22 at the upper side of the shaft portion 21. The fixing portion 82 of the bus bar 76 is fixed to a left front portion of the case body 36 using a fixing member such as a bolt.

As illustrated in FIG. 4, the first connection portion 79 of the bus bar 75 is positioned at a lower right portion of the rear portion of the case body 36. As illustrated in FIG. 7B, the first connection portion 79 of the bus bar 75 is connected to an upper end portion of the terminal connection member 69 disposed at the lower right portion of the rear portion of the case body 36. Accordingly, the core wire of the external power cable 61 and the first connection portion 79 of the bus bar 75 are electrically connected to each other. The first connection portion 79 of the bus bar 75 is fixed to the connection member insertion portion 39 provided on the right portion of the rear portion of the case body 36. The first connection portion 79 of the bus bar 76 is positioned at a lower left portion of the rear portion of the case body 36. The first connection portion 79 of the bus bar 76 is connected to an upper end portion of the terminal connection member disposed at the lower left portion of the rear portion of the case body 36. Accordingly, the core wire of the external power cable 63 and the first connection portion 79 of the bus bar 76 are electrically connected to each other. The first connection portion 79 of the bus bar 76 is fixed to the connection member insertion portion provided on the left portion of the rear portion of the case body 36.

As illustrated in FIG. 2, the internal power cable 62 is inserted into the shaft portion 21. The internal power cable 62 passes through the shaft portion 21. A lower end portion of the internal power cable 62 is connected and fixed to the positive terminal of the inverter 6 of the propulsion device 2. As illustrated in FIGS. 4, 6, and 7A, an upper end portion of the internal power cable 62 is drawn out of the shaft portion 21 from the opening portion 22 at the upper side of the shaft portion 21. A terminal 67 made of a conductive material such as metal is attached to the upper end portion of the internal power cable 62. The terminal 67 is electrically connected to the core wire of the internal power cable 62. In addition, the terminal 67 is connected to the connection surface 81 of the second connection portion 80 of the bus bar 75 disposed in the right portion in the case body 36. Accordingly, the core wire of the internal power cable 62 is electrically connected to the second connection portion 80 of the bus bar 75, and as a result, the core wire of the internal power cable 62 is electrically connected to the core wire of the external power cable 61 via the bus bar 75 and the terminal connection member 69 disposed at the lower right portion of the case body 36. In addition, the terminal 67 to which the internal power cable 62 is connected is connected to the second connection portion 80 of the bus bar 75, so that a portion of the internal power cable 62 positioned above the opening portion 22 at the upper side of the shaft portion 21, that is, the upper end portion of the internal power cable 62 is fixed to the case body 36 by the bus bar 75. Accordingly, the portion of the internal power cable 62 positioned above the opening portion 22 at the upper side of the shaft portion 21 is supported so as not to be rotatable in the left-right direction with respect to the attachment mechanism 25.

The internal power cable 64 is inserted into the shaft portion 21 and passes through the shaft portion 21. A lower end portion of the internal power cable 64 is connected and fixed to the negative terminal of the inverter 6 of the propulsion device 2. An upper end portion of the internal power cable 64 is drawn out of the shaft portion 21 from the opening portion 22 at the upper side of the shaft portion 21. A terminal 68 made of a conductive material such as metal is attached to the upper end portion of the internal power cable 64. The terminal 68 is electrically connected to the core wire of the internal power cable 64. Further, the terminal 68 is connected to the connection surface of the second connection portion 80 of the bus bar 76 disposed in the left portion in the case body 36. Accordingly, the core wire of the internal power cable 64 is electrically connected to the second connection portion 80 of the bus bar 76, and as a result, the core wire of the internal power cable 64 is electrically connected to the core wire of the external power cable 63 via the bus bar 76 and the terminal connection member disposed at the lower left portion of the case body 36. Further, the terminal 68 to which the internal power cable 64 is connected is connected to the second connection portion 80 of the bus bar 76, so that a portion of the internal power cable 64 positioned above the opening portion 22 at the upper side of the shaft portion 21, that is, the upper end portion of the internal power cable 64 is fixed to the case body 36 by the bus bar 76. Accordingly, the portion of the internal power cable 64 positioned above the opening portion 22 at the upper side of the shaft portion 21 is supported so as not to be rotatable in the left-right direction with respect to the attachment mechanism 25.

The external signal cable 85 and the internal signal cable 86 are electric cables for transmitting an electric signal for driving the motor 4 of the propulsion device 2 to the propulsion device 2. For example, the external signal cable 85 and the internal signal cable 86 are electric cables that transmit a control signal for increasing or decreasing the rotation speed of the motor 4 of the propulsion device 2 from the steering handle 15 to the inverter 6 of the propulsion device 2 according to an operation amount (rotation amount) of the grip 19 of the steering handle 15.

The steering handle 15 is provided with a sensor that detects the operation amount of the grip 19, and a front end portion of the external signal cable 85 is connected to the sensor. The external signal cable 85 extends rearward from the sensor, passes through the inside of each of the steering handle 15, the handle bracket 18, and the handle coupling member 16, and is drawn out from the rear end portion of the handle coupling member 16 to the inside of the rear cover 41 of the upper case 35 as illustrated in FIG. 4. Subsequently, the external signal cable 85 extends upward behind the case body 36, passes above the top cover 40, and then enters the top cover 40. A rear end portion of the external signal cable 85 is connected to a rear portion of the monitor 44.

As illustrated in FIG. 4, an upper end portion of the internal signal cable 86 is connected to a rear portion of the monitor 44. The control signal transmitted from the sensor provided on the steering handle 15 via the external signal cable 85 is transmitted to the internal signal cable 86 via an electric circuit in the monitor 44. The internal signal cable 86 extends downward and rearward from the rear portion of the monitor 44 and enters the shaft portion 21 from the opening portion 22 at the upper side of the shaft portion 21. Subsequently, the internal signal cable 86 extends downward in the shaft portion 21, passes through the shaft portion 21, and reaches the inverter 6 of the propulsion device 2. A lower end portion of the internal signal cable 86 is connected to, for example, a control terminal of the inverter 6.

As described above, in the outboard motor 1, the internal power cables 62 and 64 and the internal signal cable 86 pass through the shaft portion 21. In addition, the internal power cables 62 and 64 and the internal signal cable 86 are drawn out of the shaft portion 21 from the opening portion 22 at the upper side of the shaft portion 21. In addition, the upper end portion of the internal power cable 62 is fixed to the second connection portion 80 of the bus bar 75 positioned above the opening portion 22 at the upper side of the shaft portion 21. The upper end portion of the internal power cable 64 is fixed to the second connection portion 80 of the bus bar 76 positioned above the opening portion 22 at the upper side of the shaft portion 21. The upper end portion of the internal signal cable 86 is fixed to the rear portion of the monitor 44 that is disposed in the upper front of the opening portion 22 at the upper side of the shaft portion 21 and in the vicinity of the opening portion 22. On the other hand, the lower end portion of the internal power cable 62 is fixed to the positive terminal of the inverter 6 of the propulsion device 2. The lower end portion of the internal power cable 64 is fixed to the negative terminal of the inverter 6. The lower end portion of the internal signal cable 86 is fixed to the control terminal of the inverter 6. Therefore, when the steering handle 15 is operated, the steering handle 15 is rotated in the left direction, and the shaft portion 21 and the propulsion device 2 are rotated in the left direction accordingly, the internal power cables 62 and 64 and the internal signal cable 86 are displaced so as to be twisted in the left direction substantially about the axis K of the shaft portion 21 in the shaft portion 21 when the outboard motor 1 is viewed from above. In addition, when the steering handle 15 is operated, the steering handle 15 is rotated in the right direction, and the shaft portion 21 and the propulsion device 2 are rotated in the right direction accordingly, the internal power cables 62 and 64 and the internal signal cable 86 are displaced so as to be twisted in the right direction substantially about the axis K of the shaft portion 21 in the shaft portion 21 when the outboard motor 1 is viewed from above.

Considering that the internal power cables 62 and 64 and the internal signal cable 86 are twisted in the shaft portion 21 due to the rotation of the shaft portion 21 and the propulsion device 2, it is preferable that each of the internal power cables 62 and 64 and the internal signal cable 86 has a strength capable of withstanding repeated twisting. It is preferable to insert the internal power cables 62 and 64 and the internal signal cable 86 into the shaft portion 21 with appropriate slack so that the internal power cables 62 and 64 and the internal signal cable 86 are easily twisted in the shaft portion 21. In addition, it is preferable that the internal power cables 62 and 64 and the internal signal cable 86 are formed of a material having appropriate softness so that the internal power cables 62 and 64 and the internal signal cable 86 are easily twisted in the shaft portion 21. In addition, when the internal power cables 62 and 64 and the internal signal cable 86 are displaced in the shaft portion 21, the internal power cables 62 and 64 or the internal signal cable 86 may come into contact with an inner peripheral surface of the shaft portion 21. In consideration of this, it is preferable to set surface roughness of the inner peripheral surface of the shaft portion 21 to such a degree that wear of the coating of the internal power cables 62 and 64 or the internal signal cable 86 hardly occurs even when the internal power cables 62 and 64 or the internal signal cable 86 comes into contact with the inner peripheral surface of the shaft portion 21. When the internal power cables 62 and 64 and the internal signal cable 86 are displaced in the shaft portion 21, the internal power cables 62 and 64 and the internal signal cable 86 may come into contact with each other. In consideration of this, it is preferable to set the strength of the coating of each of the internal power cables 62 and 64 and the internal signal cable 86 so that the coating of the cable is hardly worn even when the cables come into contact with each other (a protective member may be provided in each cable). In addition, in order to prevent the internal power cables 62 and 64 and the internal signal cable 86 from being greatly twisted, a rotation angle of the steering handle 15 may be limited to, for example, about 90 degrees in the left-right direction.

On the other hand, the external power cables 61 and 63 are disposed outside the shaft portion 21, the rear end portion of the external power cable 61 is fixed to the first connection portion 79 of the bus bar 75, and the rear end portion of the external power cable 63 is fixed to the first connection portion 79 of the bus bar 76. Therefore, even when the steering handle 15 is operated and the shaft portion 21 and the propulsion device 2 rotate in the left direction or the right direction, neither the external power cable 61 nor the external power cable 63 is displaced. When the steering handle 15 is operated, the external signal cable 85 is displaced.

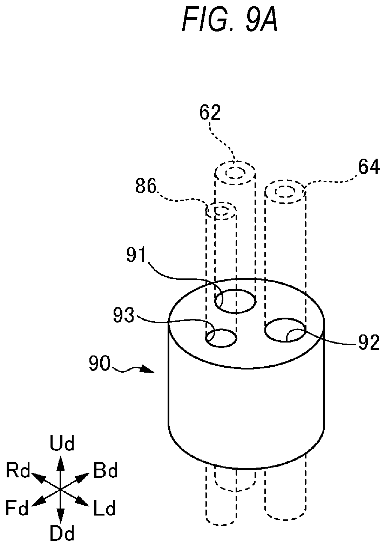

As illustrated in FIG. 2, a lower bush 90 is provided at a lower end portion of the shaft portion 21. The lower bush 90 is inserted into the lower end portion of the shaft portion 21 and is fixed to the lower end portion of the shaft portion 21 so as not to rotate with respect to the shaft portion 21. FIG. 9A illustrates the lower bush 90. As illustrated in FIG. 9A, the lower bush 90 is formed in a columnar shape. The lower bush 90 is provided with three cable insertion holes 91, 92, and 93. The lower end portion of the internal power cable 62 is inserted into the cable insertion hole 91, the lower end portion of the internal power cable 64 is inserted into the cable insertion hole 92, and the lower end portion of the internal signal cable 86 is inserted into the cable insertion hole 93. The cable insertion holes 91, 92, and 93 are disposed at positions separated from each other in a direction orthogonal to the extension direction of the axis K of the shaft portion 21. Therefore, inside the lower end portion of the shaft portion 21, the lower end portions of the internal power cables 62 and 64 and the internal signal cable 86 are positioned so as to be separated from each other in the direction orthogonal to the extension direction of the axis K of the shaft portion 21. Since the lower bush 90 is fixed to the shaft portion 21 so as not to be rotatable, the lower bush 90 rotates integrally with the shaft portion 21 and the propulsion device 2 when the shaft portion 21 and the propulsion device 2 rotate in the left-right direction by the operation of the steering handle 15. By providing the lower bush 90 at the lower end portion of the shaft portion 21, when the internal power cables 62 and 64 and the internal signal cable 86 are twisted in the shaft portion 21 along with the rotation of the shaft portion 21 and the propulsion device 2, it is possible to prevent the lower end portion of each of the internal power cables 62 and 64 and the internal signal cable 86 from being displaced with respect to the propulsion device 2. Accordingly, when the internal power cables 62 and 64 and the internal signal cable 86 are twisted in the shaft portion 21 along with the rotation of the shaft portion 21 and the propulsion device 2, a force applied from these cables to the terminal of the inverter 6 can be reduced. Further, since the lower end portions of the internal power cables 62 and 64 and the internal signal cable 86 are positioned by the lower bush 90 so as to be separated from each other in the direction orthogonal to the extension direction of the axis K of the shaft portion 21, the internal power cables 62 and 64 and the internal signal cable 86 are easily twisted when the shaft portion 21 and the propulsion device 2 are rotated in the left-right direction by the operation of the steering handle 15. The lower bush 90 is a specific example of a "cable positioning member".

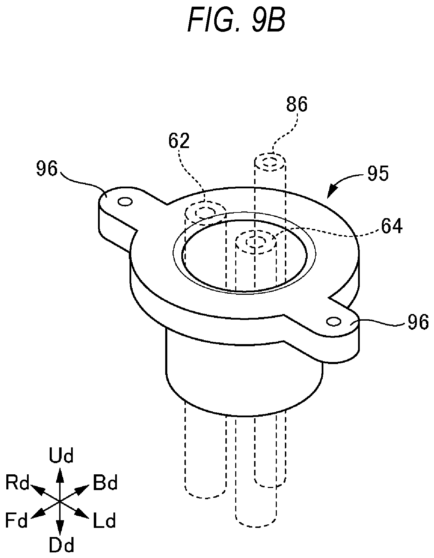

As illustrated in FIG. 4, the upper bush 95 is provided at the uppermost end portion of the shaft portion 21. FIG. 9B illustrates the upper bush 95. As illustrated in FIG. 9B, the upper bush 95 is formed in a cylindrical shape. The upper bush 95 has a pair of left and right fixing portions 96. As illustrated in FIG. 7A, the upper bush 95 is inserted into the uppermost end portion of the shaft portion 21 so as to be rotatable with respect to the shaft portion 21. The fixing portions 96 of the upper bush 95 are fixed to a left front portion and a right front portion of the case body 36 using fixing members such as bolts (fastened together with the bus bars 75 and 76). Thus, the upper bush 95 is fixed to the case body 36. In addition, the internal power cables 62 and 64 and the internal signal cable 86 pass through the inside of the upper bush 95. The upper bush 95 can prevent the upper end portion of the internal power cable 62, the upper end portion of the external power cable 63, or the upper end portion of the internal signal cable 86 from coming into contact with the inner peripheral surface of the uppermost end portion of the shaft portion 21 when the shaft portion 21 and the propulsion device 2 are rotated in the left-right direction by the operation of the steering handle 15. As a result, when the shaft portion 21 and the propulsion device 2 are rotated in the left-right direction by the operation of the steering handle 15, it is possible to prevent a large force from being applied to the second connection portion 80 of the bus bar 75, the second connection portion 80 of the bus bar 76, or the rear portion of the monitor 44, which is caused by the upper end portion of the internal power cable 62, the upper end portion of the external power cable 63, or the upper end portion of the internal signal cable 86 coming into contact with the inner peripheral surface of the uppermost end portion of the shaft portion 21 to pull the upper end portion of the internal power cable 62, the upper end portion of the external power cable 63, or the upper end portion of the internal signal cable 86 by friction therebetween.

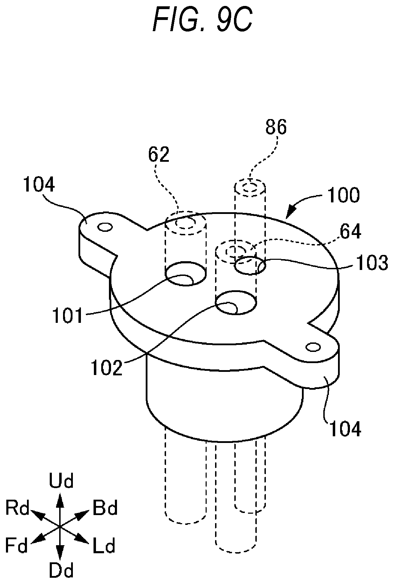

Instead of the upper bush 95 illustrated in FIG. 9B, an upper bush 100 illustrated in FIG. 9C may be provided at the uppermost end portion of the shaft portion 21. The upper bush 95 illustrated in FIG. 9B has a structure in which the internal power cables 62 and 64 and the internal signal cable 86 are collectively inserted into one hole at the center, and a diameter of the hole is large. Therefore, the upper bush 95 cannot strictly position the upper end portions of the internal power cables 62 and 64 and the internal signal cable 86. On the other hand, the upper bush 100 illustrated in FIG. 9C has a function of strictly positioning the upper end portions of the internal power cables 62 and 64 and the internal signal cable 86. That is, the upper bush 100 is provided with three cable insertion holes 101, 102, and 103. The upper end portions of the internal power cables 62 and 64 and the internal signal cable 86 can be individually inserted into the three cable insertion holes 101, 102, and 103. The cable insertion holes 101, 102, and 103 are disposed at positions separated from each other in the direction orthogonal to the extension direction of the axis K of the shaft portion 21. Therefore, inside the uppermost end portion of the shaft portion 21, the upper end portions of the internal power cables 62 and 64 and the internal signal cable 86 can be positioned by the upper bush 100 so as to be separated from each other in the direction orthogonal to the extension direction of the axis K of the shaft portion 21. Similarly to the upper bush 95, the upper bush 100 is fixed to the case body 36 via a pair of left and right fixing portions 104. Accordingly, even when the steering handle 15 is operated and the shaft portion 21 and the propulsion device 2 rotate in the left-right direction, the upper bush 100 does not rotate. By providing the upper bush 100 at the uppermost end portion of the shaft portion 21, when the internal power cables 62 and 64 and the internal signal cable 86 are twisted in the shaft portion 21 along with the rotation of the shaft portion 21 and the propulsion device 2, it is possible to prevent the upper end portion of the internal power cable 62 from being displaced with respect to the second connection portion 80 of the bus bar 75, to prevent the upper end portion of the internal power cable 64 from being displaced with respect to the second connection portion 80 of the bus bar 76, and the upper end portion of the internal signal cable 86 from being displaced with respect to the monitor 44. Accordingly, when the internal power cables 62 and 64 and the internal signal cable 86 are twisted in the shaft portion 21 with the rotation of the shaft portion 21 and the propulsion device 2, it is possible to reduce a force applied from these cables to the second connection portions 80 of the bus bars 75 and 76 and the rear portion of the monitor 44. In addition, since the upper end portions of the internal power cables 62 and 64 and the internal signal cable 86 are positioned by the upper bush 100 so as to be separated from each other in the direction orthogonal to the extension direction of the axis K of the shaft portion 21, the internal power cables 62 and 64 and the internal signal cable 86 are easily twisted when the shaft portion 21 and the propulsion device 2 are rotated in the left-right direction by the operation of the steering handle 15. The upper bush 100 is a specific example of the "cable positioning member".

As described above, in the outboard motor 1 according to the first embodiment of the present disclosure, the bus bar 75 is fixed to the case body 36 of the upper case 35 such that the second connection portion 80 thereof is positioned above the opening portion 22 at the upper side of the shaft portion 21, the cable connecting the positive terminal of the battery and the positive terminal of the inverter 6 of the propulsion device 2 is divided into the external power cable 61 and the internal power cable 62, the external power cable 61 is disposed outside the shaft portion 21, the rear end portion of the external power cable 61 is connected to the first connection portion 79 of the bus bar 75, the internal power cable 62 passes through the shaft portion 21, the lower end portion of the internal power cable 62 is fixed to the positive terminal of the inverter 6, and the upper end portion of the internal power cable 62 is drawn out of the shaft portion 21 from the opening portion 22 at the upper side of the shaft portion 21 and is connected to the second connection portion 80 of the bus bar 75. In addition, the bus bar 76 is fixed to the case body 36 of the upper case 35 such that the second connection portion 80 thereof is positioned above the opening portion 22 at the upper side of the shaft portion 21, the cable connecting the negative terminal of the battery and the negative terminal of the inverter 6 of the propulsion device 2 is divided into the external power cable 63 and the internal power cable 64, the external power cable 63 is disposed outside the shaft portion 21, the rear end portion of the external power cable 63 is connected to the first connection portion 79 of the bus bar 76, the internal power cable 64 passes through the shaft portion 21, the lower end portion of the internal power cable 64 is fixed to the negative terminal of the inverter 6, and the upper end portion of the internal power cable 64 is drawn out of the shaft portion 21 from the opening portion 22 at the upper side of the shaft portion 21 and is connected to the second connection portion 80 of the bus bar 76. In such a configuration, when the shaft portion 21 and the propulsion device 2 are rotated in the left-right direction by the operation of the steering handle 15, the internal power cables 62 and 64 are displaced so as to be twisted substantially about the axis K of the shaft portion 21 in the shaft portion 21. On the other hand, even when the shaft portion 21 and the propulsion device 2 are rotated in the left-right direction by the operation of the steering handle 15, neither of the external power cables 61 and 63 is displaced. Since neither of the external power cables 61 and 63 is displaced even when the shaft portion 21 and the propulsion device 2 rotate in the left-right direction, the external power cable 61 or the external power cable 63 does not hit a hull or an object provided on the ship due to the rotation of the shaft portion 21 and the propulsion device 2. Further, when the shaft portion 21 and the propulsion device 2 rotate in the left-right direction, the internal power cables 62 and 64 are merely displaced so as to be twisted in the shaft portion 21, and thus the internal power cable 62 or the internal power cable 64 does not hit a hull or an object provided on the ship due to the rotation of the shaft portion 21 and the propulsion device 2. As described above, according to the outboard motor 1 according to the present embodiment, when the propulsion device 2 rotates in the left-right direction with respect to the ship, the cables 61 to 64 connected to the propulsion device 2 is prevented from being displaced in conjunction with the propulsion device 2, and thus, when the propulsion device 2 rotates in the left-right direction with respect to the ship, the cables 61 to 64 connected to the propulsion device 2 is prevented from hitting a hull or an object provided on the ship.

In the outboard motor 1 according to the present embodiment, when the propulsion device 2 rotates in the left-right direction, the internal power cables 62 and 64 are displaced so as to be twisted substantially about the axis K of the shaft portion 21 in the shaft portion 21, and the external power cables 61 and 63 are not displaced. Therefore, in the outboard motor 1, it is sufficient to secure a space above the opening portion 22 at the upper side of the shaft portion 21 and a space in the shaft portion 21 as a space for allowing the displacement of the cables 61 to 64 accompanying the rotation of the propulsion device 2. Therefore, the space for allowing the displacement of the cables 61 to 64 accompanying the rotation of the propulsion device 2 can be reduced. Accordingly, a compact outboard motor 1 is achieved.

In supplying electric power from the battery to the inverter 6, from an electrical standpoint, only one cable is sufficient to connect between the positive terminal of the battery and the positive terminal of the inverter 6, but in the outboard motor 1 according to the present embodiment, the cable is divided into the external power cable 61 and the internal power cable 62. The external power cable 61 is routed so as to extend in the front-rear direction outside the shaft portion 21, the internal power cable 62 is routed so as to extend in the upper-lower direction inside the shaft portion 21, and the external power cable 61 and the internal power cable 62 are electrically connected via the bus bar 75. With such a configuration, it is possible to reduce a space required for routing the cable connecting the positive terminal of the battery and the positive terminal of the inverter 6.

Specifically, a current value required to drive the motor is large, and a large current flows through the cable connecting the positive terminal of the battery and the positive terminal of the inverter 6. Therefore, the cable is thick and has high rigidity. Therefore, when the cable is bent in order to change the extension direction of the cable by, for example, 90 degrees during routing the cable, a radius of curvature of the bent portion of the cable increases. As a result, when the number of cables connecting the positive terminal of the battery and the positive terminal of the inverter 6 is one, a space required for routing the cable by bending the cable by 90 degrees increases. On the other hand, in the outboard motor 1 according to the present embodiment, the cable connecting the positive terminal of the battery and the positive terminal of the inverter 6 is divided into the external power cable 61 and the internal power cable 62, and the external power cable 61 extending in the front-rear direction and the internal power cable 62 extending in the upper-lower direction are connected via the bus bar 75. According to this configuration, the extension direction of the internal power cable 62 can be changed by 90 degrees with respect to the extension direction of the external power cable 61 without bending both the external power cable 61 and the internal power cable 62. Therefore, the space required for routing the external power cable 61 and the internal power cable 62 connecting the positive terminal of the battery and the positive terminal of the inverter 6 and for disposing the bus bar 75 is smaller than the space required for routing one cable connecting the positive terminal of the battery and the positive terminal of the inverter 6 by bending the cable by 90 degrees. As described above, according to the outboard motor 1 of the present embodiment, it is possible to reduce the space required for routing the cable connecting the positive terminal of the battery and the positive terminal of the inverter 6.

In the outboard motor 1 according to the present embodiment, the cable connecting the negative terminal of the battery and the negative terminal of the inverter 6 is divided into the external power cable 63 and the internal power cable 64. The external power cable 63 is routed so as to extend in the front-rear direction outside the shaft portion 21, the internal power cable 64 is routed so as to extend in the upper-lower direction inside the shaft portion 21, and the external power cable 63 and the internal power cable 64 are electrically connected via the bus bar 76. With such a configuration, it is possible to reduce the space required for routing the cable connecting the negative terminal of the battery and the negative terminal of the inverter 6.

As described above, according to the outboard motor 1 of the present embodiment, since the space required for routing the cable connecting the positive terminal of the battery and the positive terminal of the inverter 6 and the space required for routing the cable connecting the negative terminal of the battery and the negative terminal of the inverter 6 can both be reduced, and the outboard motor 1 can be reduced in size.

In the outboard motor 1 according to the present embodiment, the bus bars 75 and 76 are disposed such that the second connection portions 80 thereof are positioned above the opening portion 22 at the upper side of the shaft portion 21, the second connection portion 80 of each of the bus bars 75 and 76 has the connection surface 81 parallel to the axis K of the shaft portion 21, the upper end portion of the internal power cable 62 is connected to the connection surface 81 of the second connection portion 80 of the bus bar 75, and the upper end portion of the internal power cable 64 is connected to the connection surface 81 of the second connection portion 80 of the bus bar 76. With this configuration, the upper end portion of the internal power cable 62 extending in the upper-lower direction can be connected to the second connection portion 80 of the bus bar 75 with almost no bending, and the upper end portion of the internal power cable 64 extending in the upper-lower direction can be connected to the second connection portion 80 of the bus bar 76 with almost no bending. Therefore, it is possible to prevent the upper end side portions of the internal power cables 62 and 64 can be prevented from bending in the shaft portion 21, and it is possible to prevent the upper end side portion of the internal power cable 62 or 64 from coming into strong contact with the inner peripheral surface of the shaft portion 21.

### Second Embodiment

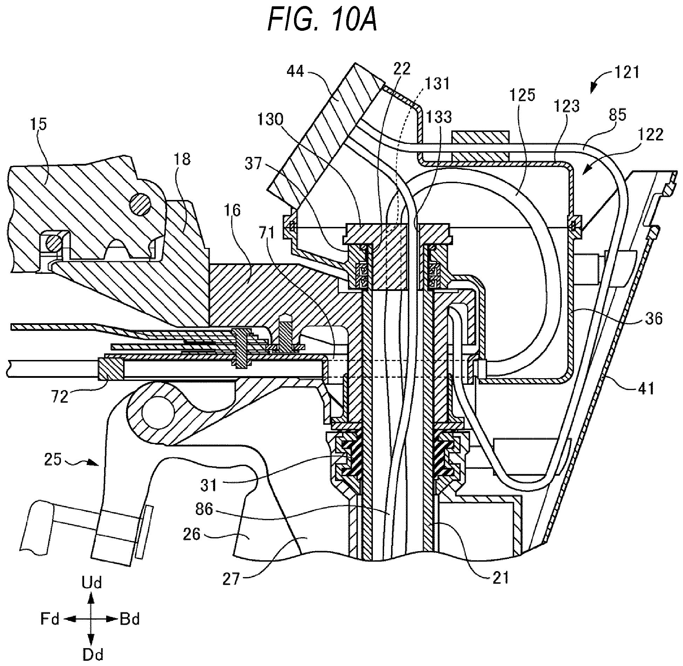

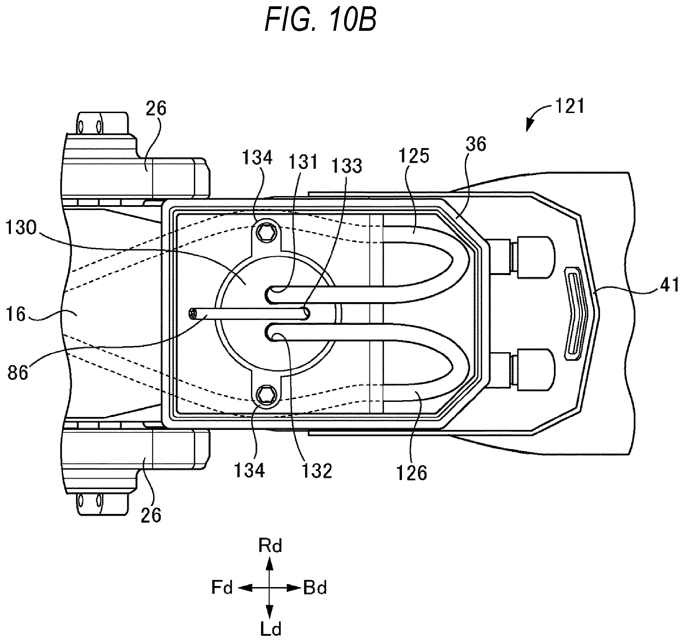

FIG. 10A illustrates a cross section of an upper portion of an outboard motor 121 according to a second embodiment of the present disclosure. FIG. 10B illustrates the outboard motor 121 with a top cover 123 removed, as viewed from above. In the outboard motor 121 according to the second embodiment of the disclosure, the same components as those of the outboard motor 1 according to the first embodiment of the disclosure are denoted by the same reference numerals, and description thereof is omitted or simplified.

As illustrated in FIGS. 10A and 10B, the outboard motor 121 includes a single power cable 125 that connects the positive terminal of the battery and the positive terminal of the inverter of the propulsion device. A lower portion of the power cable 125 extends in the upper-lower direction through the shaft portion 21, and a lower end portion of the power cable 125 is connected and fixed to the positive terminal of the inverter of the propulsion device. An upper portion of the power cable 125 is drawn out of the shaft portion 21 from the opening portion 22 at the upper side of the shaft portion 21. Further, a portion of the power cable 125 drawn out from the opening portion 22 on the upper side of the shaft portion 21 is bent so as to draw an arc having a central angle of 270 degrees, and then extends forward toward the ship. A front end portion of the power cable 125 is connected to the positive terminal of the battery provided in the ship to which the outboard motor 121 is attached. The outboard motor 121 also includes a single power cable 126 that connects the negative terminal of the battery and the negative terminal of the inverter of the propulsion device. As illustrated in FIG. 10B, the power cable 126 is routed similarly to the power cable 125. A lower end portion of the power cable 126 is connected and fixed to the negative terminal of the inverter of the propulsion device. A front end portion of the power cable 126 is connected to the negative terminal of the battery provided in the ship to which the outboard motor 121 is attached.

The outboard motor 121 also includes an upper bush 130 that supports a portion of the power cable 125 that is positioned above the opening portion 22 from the inside of the opening portion 22 at the upper side of the shaft portion 21 and a portion of the power cable 126 that is positioned above the opening portion 22 from the inside of the opening portion 22 at the upper side of the shaft portion 21 so as not to be rotatable in the left-right direction with respect to the attachment mechanism 25. The upper bush 130 is inserted into the inside of the uppermost end portion of the shaft portion 21 so as to be rotatable with respect to the shaft portion 21. Similarly to the upper bush 100 illustrated in FIG. 9C, the upper bush 130 has a pair of left and right fixing portions 134. As illustrated in FIG. 10B, the upper bush 130 is fixed to the case body 36 by fixing the fixing portions 134 to the right front portion and the left front portion of the case body 36 of the upper case 122 using fixing members such as bolts. The upper bush 130 is provided with cable insertion holes 131, 132, and 133. The power cable 125 is inserted into the cable insertion hole 131, the power cable 126 is inserted into the cable insertion hole 132, and the internal signal cable 86 is inserted into the cable insertion hole 133. The upper bush 130 is formed of a material having a larger dimension in the upper-lower direction than that of the upper bush 100 illustrated in FIG. 9C and having a higher strength than that of the upper bush 100 illustrated in FIG. 9C so that a portion of the power cable 125 positioned above the opening portion 22 from the inside of the opening portion 22 at the upper side of the shaft portion 21 and a portion of the power cable 126 positioned above the opening portion 22 from the inside of the opening portion 22 at the upper side of the shaft portion 21 can be firmly supported so as not to be rotatable with respect to the attachment mechanism 25. Similarly to the upper bush 100 illustrated in FIG. 9C, the upper bush 130 has a function of positioning the power cables 125 and 126 and the internal signal cable 86 such that the upper end portions of the power cables 125 and 126 and the internal signal cable 86 are separated from each other in the direction orthogonal to the extension direction of the axis of the shaft portion 21. The upper bush 130 is a specific example of the "cable support portion" and the "cable positioning member".

In the outboard motor 121 according to the second embodiment of the present disclosure having such a configuration, when the shaft portion 21 and the propulsion device are rotated in the left-right direction by the operation of the steering handle 15, the portion of each of the power cables 125 and 126 from the portion positioned inside the opening portion 22 at the upper side of the shaft portion 21 to the lower end portion is displaced so as to be twisted substantially about the axis of the shaft portion 21. However, even when the shaft portion 21 and the propulsion device are rotated in the left-right direction by the operation of the steering handle 15, the portion of each of the power cables 125 and 126 from the front end portion connected to the battery provided in the ship to a portion thereof positioned above the opening portion 22 at the upper side of the shaft portion 21 is not displaced. As described above, according to the outboard motor 121 of the second embodiment of the present disclosure, when the propulsion device rotates in the left-right direction with respect to the ship, the cables 125 and 126 connected to the propulsion device are prevented from being displaced in conjunction with the propulsion device. Therefore, when the propulsion device rotates in the left-right direction with respect to the ship, the cables 125 and 126 connected to the propulsion device are prevented from hitting a hull or an object provided on the ship.

It should be noted that the external power cables 61 and 63 according to the first embodiment may be routed outside the shaft portion 21 so as not to be displaced with the rotation of the steering handle 15, the shaft portion 21 and the propulsion device 2, and a specific routing path of the external power cables 61 and 63 is not limited as long as the external power cables 61 and 63 are routed in this manner. The same applies to the routing of the portions of the power cables 125 and 126 according to the second embodiment drawn out from the opening portion 22 at the upper side of the shaft portion 21.

In the outboard motor 1 according to the first embodiment, the bus bar 75 (76) is used as the cable support portion, but instead of the bus bar 75 (76), another member may be used that has conductivity and is strong enough to support the rear end portion of the external power cable 61 (63) and the upper end portion of the internal power cable 62 (64) such that they are not rotatable in the left-right direction with respect to the case body 36.

The outboard motor 1 according to the first embodiment has a configuration in which the bus bar 75 (76) is fixed to the case body 36 of the upper case 35 such that the second connection portion 80 is positioned above the opening portion 22 at the upper side of the shaft portion 21, the cable for supplying electric power for driving the motor 4 to the propulsion device 2 is divided into the external power cable 61 (63) and the internal power cable 62 (64), the external power cable 61 (63) is disposed outside the shaft portion 21, the rear end portion of the external power cable 61 (63) is connected to the first connection portion 79 of the bus bar 75 (76), the internal power cable 62 (64) is inserted into the shaft portion 21, the lower end portion of the internal power cable 62 (64) is fixed to the propulsion device 2, and the upper end portion of the internal power cable 62 (64) is drawn out of the shaft portion 21 from the opening portion 22 at the upper side of the shaft portion 21 and is connected to the second connection portion 80 of the bus bar 75 (76). However, the present invention is not limited thereto. For example, the bus bar may be fixed to the case body 36 of the upper case 35 such that the second connection portion thereof is positioned above the opening portion 22 at the upper side of the shaft portion 21, a cable for transmitting a control signal output from a remote control device for an outboard motor provided in the ship to the propulsion device 2 may be divided into an external remote control signal cable and an internal remote control signal cable, the external remote control signal cable may be disposed outside the shaft portion 21, a rear end portion of the external remote control signal cable may be connected to the first connection portion of the bus bar, the internal remote control signal cable may be inserted into the shaft portion 21, a lower end portion of the internal remote control signal cable may be fixed to the propulsion device 2, and an upper end portion of the internal remote control signal cable may be drawn out of the shaft portion 21 from the opening portion 22 at the upper side of the shaft portion 21 and is connected to the second connection portion of the bus bar.

The outboard motor 121 according to the second embodiment has a configuration in which the lower portion of the power cable 125 (126) is inserted into the shaft portion 21, the lower end portion of the power cable 125 (126) is fixed to the propulsion device, the upper portion of the power cable 125 (126) is drawn out of the shaft portion 21 from the opening portion 22 at the upper side of the shaft portion 21, the portion of the power cable 125 (126) drawn out from the opening portion 22 at the upper side of the shaft portion 21 is routed so as to extend forward toward the ship, and the portion of the power cable 125 (126) positioned above the opening portion 22 from the inside of the opening portion 22 at the upper side of the shaft portion 21 is supported by the upper bush 130 so as not to be rotatable in the left-right direction with respect to the attachment mechanism 25. However, the present invention is not limited thereto. For example, the lower portion of the remote control signal cable that transmits a control signal output from the remote control device for an outboard motor provided in the ship to the propulsion device 2 may be inserted into the shaft portion 21, the lower end portion of the remote control signal cable may be fixed to the propulsion device, the upper portion of the remote control signal cable may be drawn out of the shaft portion 21 from the opening portion 22 at the upper side of the shaft portion 21, the portion of the remote control signal cable drawn out from the opening portion 22 at the upper side of the shaft portion 21 may be routed so as to extend forward toward the ship, and the portion of the remote control signal cable positioned above the opening portion 22 from the inside of the opening portion 22 at the upper side of the shaft portion 21 may be supported by the upper bush 130 so as not to be rotatable in the left-right direction with respect to the attachment mechanism 25.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. An outboard motor for propelling a ship, the outboard motor comprising:
a propulsion device including a propeller and a motor configured to rotate the propeller;
a steering handle configured to change an orientation of the propulsion device in a left-right direction;
a shaft portion having a tubular shape and extending in an upper-lower direction, the propulsion device being fixed to a lower end side portion of the shaft portion, the steering handle being fixed to an upper end side portion of the shaft portion;
an attachment mechanism configured to attach the shaft portion to the ship so as to be rotated about an axis of the shaft portion;
a cable passing through inside the shaft portion and configured to transmit electric power or an electric signal for driving the motor to the propulsion device, a lower end portion of the cable being fixed to the propulsion device, an upper portion of the cable being drawn out of the shaft portion from an opening portion at an upper side of the shaft portion; and
a cable support portion configured to support a part of a portion of the cable drawn out of the shaft portion from the opening portion at the upper side of the shaft portion, a portion of the cable positioned above the opening portion at the upper side of the shaft portion, or a portion of the cable positioned inside the opening portion at the upper side of the shaft portion so as not to be rotated in the left-right direction with respect to the attachment mechanism.

2. The outboard motor according to claim 1, further comprising:
an upper case fixed to the attachment mechanism and covering the upper end side portion of the shaft portion,
wherein the cable support portion is fixed to the upper case.

3. The outboard motor according to claim 1, further comprising:
an upper case fixed to the attachment mechanism and covering the upper end side portion of the shaft portion,
wherein the cable support portion is made of a conductive material, includes a first connection portion and a second connection portion, and is fixed to the upper case such that the second connection portion is positioned above the opening portion at the upper side of the shaft portion,
the cable is divided into a first cable portion and a second cable portion,
the first cable portion is disposed outside the shaft portion, and one end portion of the first cable portion is connected to the first connection portion,
the second cable portion passes through inside the shaft portion,
a lower end portion of the second cable portion is fixed to the propulsion device, and
an upper end portion of the second cable portion is drawn out of the shaft portion from the opening portion at the upper side of the shaft portion and is connected to the second connection portion.

4. The outboard motor according to claim 3,
wherein the second connection portion includes a connection surface parallel to the axis of the shaft portion, and
an upper end portion of the second cable portion is connected to the connection surface.

5. The outboard motor according to claim 1, further comprising:
a plurality of the cables,
wherein a lower end portion or an upper end portion of the shaft portion is provided with a cable positioning member configured to position the plurality of cables such that the plurality of cables are separated from each other in a direction orthogonal to an extension direction of the axis of the shaft portion inside the shaft portion.
